# EUROPÄISCHE PATENTSCHRIFT

(11) **EP 3 635 314 B1**
(45) Veröffentlichungstag und Bekanntmachung des Hinweises auf die Patenterteilung: **10.03.2021**
(21) Anmeldenummer: 18726455.1
(22) Anmeldetag: 22.05.2018
(51) Int. Cl.: F28D 7/02, F28F 1/36, F28F 21/08, F01N 3/04, F01N 5/02, F28D 21/00, F28F 27/02, F01N 3/02

(54) **VORRICHTUNG ZUR WÄRMERÜCKGEWINNUNG**
HEAT RECOVERY DEVICE
DISPOSITIF DE RÉCUPÉRATION DE CHALEUR

(30) Priorität: 08.06.2017 DE 102017209727
(43) Veröffentlichungstag der Anmeldung: 15.04.2020
(73) Patentinhaber: Volkswagen Aktiengesellschaft, 38440 Wolfsburg (DE)
(72) Erfinder: GOCKEL, Jens, 59909 Bestwig-Heringhausen (DE); LÄMMER, Hilmar, 34281 Gudensberg (DE); URBAN, Christian, 30173 Hannover (DE)
(86) Internationale Anmeldenummer: PCT/EP2018/063280
(87) Internationale Veröffentlichungsnummer: WO 2018/224297

(56) Entgegenhaltungen:
- EP-A1- 0 819 497
- EP-A1- 2 762 695
- EP-A2- 0 303 074
- DE-A1-102012 204 126
- DE-U1-202006 016 339

## Beschreibung

Die Erfindung betrifft eine Vorrichtung zur Wärmerückgewinnung aus einem Heizfluid, welche eine Wärmeübertrageranordnung mit einem von einem Nebenströmungskanal umgebenen Hauptströmungskanal aufweist. Hierbei ist innerhalb des Nebenströmungskanals mindestens ein Wärmeübertragerelement angeordnet, mittels welchem im Betrieb einer Abwärmequelle Wärme aus einem von der Abwärmequelle erzeugten Heizfluid in ein das Wärmeübertragerelement durchströmendes Arbeitsfluid übertragbar ist.

Hierzu wird in der DE 10 2012 204 126 A1 ein Dampferzeuger beschrieben, welcher im Abgastrakt eines Kraftfahrzeugmotors angeordnet ist. Der Dampferzeuger weist hierbei ein Gehäuse mit einem Einlass- sowie einem Auslassbereich auf, wobei innerhalb und koaxial zum Gehäuse eine sich vom Einlass- zum Auslassbereich erstreckende, rohrförmige Durchführungsleitung angeordnet ist. Diese Durchführungsleitung ist zudem an ihren im Einlass- und Auslassbereich liegenden Endabschnitten geschlitzt, sodass das in den Dampferzeuger einströmende Abgas in einen Zwischenraum zwischen Gehäusewand und Durchführungsleitung gelangen kann. In diesem Zwischenraum ist anliegend an die Durchführungsleitung ein Spiralrohr angeordnet, das von einem zu verdampfenden Fluid durchströmt wird. Das in einer Ausführungsform zur Erhöhung der Wärmeübertragung scheibenartige Rippen aufweisende Spiralrohr dient dabei als Wärmeübertragerbaustein, über welchen die im Abgas vorhandene thermische Energie auf das zu verdampfende Fluid übertragen wird. Weiterhin ist innerhalb des Dampferzeugers, im Genauen innerhalb der Durchführungsleitung, eine Steuerklappe angeordnet, mittels welcher in Abhängigkeit der Stellung der Steuerklappe die Durchführungsleitung in einem geschlossenen oder geöffneten Zustand vorliegt. Bevorzugt ist die Steuerklappe im Einlassbereich angeordnet, wobei bei geschlossener Durchführungsleitung das Abgas durch den geschlitzten Endbereich der Durchführungsleitung in den Zwischenraum zwischen Durchführungsleitung und Gehäuse gelangt und das Spiralrohr überströmt. Liegt die Durchführungsleitung in geöffnetem Zustand vor, gelangt das Abgas unter Umgehung des Zwischenbereiches direkt vom Einlass- zum Auslassbereich, wodurch eine Wärmeübertragung vom Abgas in das zu verdampfende Fluid weitgehend vermieden wird. Die Ausgestaltung des verwendeten Spiralrohres ist hierbei als nachteilig anzusehen, da eine Anpassung Spiralrohres an unterschiedliche Anforderungen, z. B. hinsichtlich der Temperaturbeständigkeit, Wärmeleitfähigkeit und Korrosionsbeständigkeit nicht möglich ist Weiterhin offenbart DE-A-102012204126 eine Vorrichtung gemäß dem Oberbegriff des Anspruchs 1.

Auch der DE 20 2006 016 339 U1 ist ein Wärmetauscher zu entnehmen, welcher als wärmetauschendes Element eine wendelförmige Rohranordnung aufweist. Diese Rohranordnung besteht dabei aus einem Rohr, welches umfangsseitig mit Rippen versehen ist. Herstellungsmöglichkeiten des beschriebenen, mit scheibenartigen Rippen versehenen Spiralrohres sind unter anderem durch die EP 0 303 074 B1 und die EP 0 819 497 B1 beschrieben. Hierbei wird ein die Rippen bildendes Endlosband spiralförmig in Längsrichtung beabstandet um ein Rohr gewickelt und mittels eines Laserstrahlschweißverfahrens mit diesem stoffschlüssig verbunden. Im Falle der EP 0 303 074 B1 wird dabei die Oberfläche des Rohres und die dem Rohr zugewandte Unterkante des Bandes im Kontaktbereich von Rohr und Band aufgeschmolzen, im Falle der EP 0 819 497 B1 wird hingegen lediglich die Oberfläche des Rohres im Kontaktbereich von Rohr und Band, jedoch vor dem Kontakt des Bandes mit dem Rohr, aufgeschmolzen. Mittels des durch die EP 0 819 497 B1 beschriebenen Verfahrens wird es somit vereinfacht ermöglicht, ein Rohr aus Edelstahl mit einem Endlosband aus Kupfer zu verbinden. Dies ist bei dem durch die EP 0 303 074 B1 offenbarten Verfahren aufgrund der unterschiedlichen Materialeigenschaften, wie einem voneinander abweichenden Schmelzpunkt nur erschwert möglich.

Vor diesem Hintergrund liegt der Erfindung die Aufgabe zugrunde, die Vorrichtung der eingangs genannten Art derart auszuführen, dass die Wärmeübertrageranordnung und insbesondere das Wärmeübertragerelement derart ausgestaltet ist, dass eine Anpassung an unterschiedliche Anforderungen, beispielsweise hinsichtlich der Temperaturbeständigkeit, Wärmeleitfähigkeit und Korrosionsbeständigkeit, realisierbar ist.

Diese Aufgabe wird gelöst mit einer Vorrichtung gemäß den Merkmalen des Patentanspruches 1. Die Unteransprüche betreffen besonders zweckmäßige Weiterbildungen der Erfindung. Erfindungsgemäß ist also eine Vorrichtung zur Wärmerückgewinnung aus einem Heizfluid vorgesehen, welche eine Wärmeübertrageranordnung mit einem von einem Nebenströmungskanal umgebenen Hauptströmungskanal aufweist. Dabei ist innerhalb des Nebenströmungskanals mindestens ein Wärmeübertragerelement angeordnet, mittels welchem im Betrieb einer Abwärmequelle Wärme aus einem von der Abwärmequelle erzeugten Heizfluid in ein das Wärmeübertragerelement durchströmendes Arbeitsfluid übertragbar ist. Weiterhin weist das Wärmeübertragerelement erfindungsgemäß zumindest zwei Komponenten auf, wobei in zumindest einem Abschnitt des Wärmeübertragerelementes hierbei der Werkstoff einer von dem Arbeitsfluid durchströmbaren ersten Komponente des Wärmeübertragerelementes und der Werkstoff einer die Oberfläche des Wärmeübertragerelementes vergrößernden, zweiten Komponente des Wärmeübertragerelementes sich voneinander unterscheidende Werkstoffeigenschaften aufweist. Es ist somit denkbar, dass das Wärmeübertragerelement lediglich über einen Abschnitt verfügt, d. h. im Wesentlichen aus diesem einen Abschnitt besteht, in welchem sich die Werkstoffe und/oder die Werkstoffeigenschaften von erster Komponente und zweiter Komponente des Wärmeübertragerelementes unterscheiden. Zwei oder mehr Abschnitte können jedoch ausbildbar sein. Durch die Verwendung unterschiedlicher Werkstoffe oder entsprechender Werkstoffe mit sich unterscheidenden Werkstoffeigenschaften für die erste Komponente und die zweite Komponente des Wärmeübertragerelementes ist es möglich, das Wärmeübertragerelement auf Korrosionsbeständigkeit gegenüber dem Arbeitsfluid und/oder dem Heizfluid anzupassen. Darüber hinaus bestünde, auch in Kombination mit der Anpassung an die Korrosionsbeständigkeit, die Möglichkeit, das Wärmeübertragerelement hinsichtlich der Temperaturbeständigkeit und/oder den Anforderungen an die Wärmeleitfähigkeit von erster Komponente und zweiter Komponente auszulegen. Dies ist insbesondere dahingehend vorteilhaft, wenn das den Nebenströmungskanal der Wärmeübertrageranordnung durchströmende und somit das Wärmeübertragerelement überströmende Heizfluid nach Anwendungsfall und/oder Positionierung der Vorrichtung unterschiedliche Temperaturen aufweist.

Beispielsweise ist denkbar, dass die Vorrichtung innerhalb des Abgassystems einer Brennkraftmaschine angeordnet ist, wodurch je nach Beabstandung der Vorrichtung stromabwärts zur Brennkraftmaschine das die Wärmeübertrageranordnung der Vorrichtung durchströmende Abgas eine unterschiedliche Temperatur aufweisen würde.

Liegen hohe Temperaturen des Heizfluides vor, wäre ein Werkstoff mit einer hohen Temperaurbeständigkeit und womöglich geringerer Wärmeleitfähigkeit gegenüber einem Werkstoff mit demgegenüber geringerer Temperaturbeständigkeit, jedoch höherer Wärmeleitfähigkeit bevorzugt zu verwenden. Liegt dem hingegen eine geringere Temperatur des Heizfluides vor, bei welcher eine hohe Wärmeleitfähigkeit des Werkstoffes gegenüber einer hohen Temperaturbeständigkeit zu bevorzugen ist, so wäre ein solcher Werkstoff einzusetzen.

Dies betrifft hierbei die erste Komponente sowie die zweite Komponente des Wärmeübertragerelementes, wobei die Auswahl des Werkstoffes insbesondere hinsichtlich der zweiten, die Oberfläche des Wärmeübertragerelementes vergrößernden Komponente zu beachten ist, da aufgrund der im Vergleich zur ersten Komponente größeren Oberfläche, der Hauptteil des Wärmeflusses über diese zweite Komponente aus dem Heizfluid abgeleitet wird.

Vergleichbar mit der Temperaturbeständigkeit und der Wärmeleitfähigkeit ist die Korrosionsbeständigkeit zu betrachten. Durch eine Verwendung von verschiedenen Werkstoffen oder einem Werkstoff mit unterschiedlichen Werkstoffeigenschaften in Abhängigkeit des Heizfluides und/oder des Arbeitsfluides ließe sich die Korrosionsbeständigkeit gegenüber dem Heizfluid und/oder dem Arbeitsfluid erhöhen.

Das Heizfluid kann hierbei beispielsweise als ein Abgas ausgebildet sein, welches das Abgassystem, insbesondere das Abgassystem der Brennkraftmaschine, durchströmt, wobei die Brennkraftmaschine entsprechend die Abwärmequelle darstellen würde. Die Brennkraftmaschine könnte zudem als Verbrennungsmotor eines Kraftfahrzeuges ausgebildet sein.

Das Arbeitsfluid hingegen sollte als ein Fluid ausgebildet sein, welches durch die aus dem Heizfluid durch das Wärmeübertragerelement übertragene Wärme aus der flüssigen in die gasförmige Phase übergeht, also verdampft werden kann. Infrage kommen für ein solches Arbeitsfluid beispielsweise Wasser, aber auch Alkohole wie Ethanol. Zudem ließen sich als Arbeitsfluid Kältemittel unterschiedlicher Ausprägung verwenden.

In einer besonders vorteilhaften Weiterbildung der Erfindung weist das Wärmeübertragerelement mindestens zwei Abschnitte auf, wobei der Werkstoff und/oder die Werkstoffeigenschaften von der ersten Komponente und der zweiten Komponente des Wärmeübertragerelementes in einem ersten Abschnitt gleich und in einem zweitem Abschnitt unterschiedlich ausgebildet ist oder sind. Aufgrund der Ausbildung der ersten Komponente und der zweiten Komponente mittels des gleichen Werkstoffes und somit gleicher Werkstoffeigenschaften im ersten Abschnitt und der Ausbildung von der ersten Komponente und zweiten Komponente mit sich voneinander unterscheidenden Werkstoffen oder Werkstoffen mit sich unterscheidenden Werkstoffeigenschaften im zweiten Abschnitt des Wärmeübertragerelementes ist eine Anpassung des Wärmeübertragerelementes an in den Abschnitten auftretende, sich unterscheidende Anforderungen, beispielsweise an die bereits erwähnte Temperaturbeständigkeit, die Wärmeleitfähigkeit und/oder die Korrosionsbeständigkeit, von der ersten Komponente und/oder zweiten Komponente möglich.

Eine überdies gewinnbringende Ausführungsform der Erfindung liegt darin begründet, dass der erste Abschnitt des Wärmeübertragerelementes einem Einlass des Nebenströmungskanals zugewandt gerichtet und/oder der zweite Abschnitt des Wärmeübertragerelementes dem Einlass des Nebenströmungskanals abgewandt gerichtet im Nebenströmungskanal angeordnet ist. Die Ausrichtung der Abschnitte, und hierbei des ersten Abschnittes des Wärmeübertragerelementes dem Einlass des Nebenströmungskanals zu- und des zweiten Abschnittes des Wärmeübertragers dem Einlass des Nebenströmungskanals abgewandt, ermöglicht es, den Werkstoff und/oder die Werkstoffeigenschaften des Werkstoffes der ersten Komponente und der zweiten Komponente des ersten Abschnittes insbesondere auf die Eigenschaften des durch den Einlass des Nebenströmungskanals einströmenden Heizfluides abzustimmen. In diesem Fall sind vor allem im Bereich des Einlasses zu erwartende hohe Temperaturen des Heizfluides zu beachten. Ginge man davon aus, dass das Heizfluid als ein das Abgassystem einer Brennkraftmaschine durchströmendes Abgas ausgebildet ist, so können die Temperaturen des Heizfluides einen Bereich von 400 Grad Celsius bis 800 Grad Celsius umfassen. Durch eine Ausgestaltung des ersten Abschnittes des Wärmeübertragerelementes mittels gleichartiger Werkstoffe und/oder gleichartiger Werkstoffeigenschaften ließe sich eine bei den beschriebenen Temperaturen ablaufende und gegebenenfalls durch das Heizfluid katalysierte Reaktion bei verschiedener Werkstoffgestaltung zwischen der ersten Komponente und zweiten Komponente des Wärmeübertragerelementes vermeiden.

Weist in diesem Zusammenhang der Werkstoff der zweiten Komponente im zweiten Abschnitt des Wärmeübertragerelementes zudem eine höhere Wärmeleitfähigkeit auf als der Werkstoff der zweiten Komponente im ersten Abschnitt des Wärmeübertragerelementes, dann ist dies dahingehend als erfolgversprechend anzusehen, dass eine weitgehend optimale Nutzung der in dem Heizfluid vorhandenen thermischen Energie ermöglicht wird. Aufgrund der Abkühlung des Heizfluides bei der Durchströmung des Nebenströmungskanals würde sich vom Einlass zum Auslass des Nebenströmungskanals über dessen Länge in dem Heizfluid ein Temperaturgefälle einstellen. Aufgrund dieses Temperaturgefälles würde der z. B. dem Einlass des Nebenströmungskanals entgegengerichtet in dem Nebenströmungskanal angeordnete, zweite Abschnitt des Wärmeübertragerelementes so gestaltet sein, dass bedingt durch die höhere Wärmeleitfähigkeit ein nahezu unverändert hoher Wärmefluss aus dem Heizfluid über die zweite Komponente in die erste Komponente und von dieser in das Arbeitsfluid gewährleistet werden könnte. In diesem Zusammenhang ist es denkbar, dass der Werkstoff der zweiten Komponente im ersten Abschnitt des Wärmeübertragerelementes eine höhere Temperaturbeständigkeit aufweist als der Werkstoff der zweiten Komponente im zweiten Abschnitt des Wärmeübertragerelementes. Hierdurch könnte beispielsweise ein Defekt der zweiten Komponente im ersten Abschnitt aufgrund höherer Temperaturen als im zweiten Abschnitt vermieden werden. Der erste Abschnitt des Wärmeübertragerelementes wäre damit überaus vorteilhaft als ein quasi Hochtemperaturbereich, der zweite Abschnitt des Wärmeübertragelementes als ein Niedertemperaturbereich ausgebildet.

Eine mit Vorteil behaftete Weiterbildung der Erfindung ist weiterhin dadurch gekennzeichnet, dass das Wärmeübertragerelement als zumindest eine Rohrwendel ausgebildet ist. Dabei bietet die Ausführung als eine Rohrwendel z. B. gegenüber einer Ausführung des Wärmeübertragerelementes als geradlinig sowie im Wesentlichen parallel zueinander und parallel zum Haupt- sowie Nebenströmungskanal verlaufenden Einzelrohren den Vorteil, dass sich keine Ungleichverteilung des Volumenstromes des Heizfluides und somit eine ungleichmäßige oder gar ausbleibende Verdampfung des Arbeitsfluides und/oder ein Defekt von lokal überhitzten Einzelrohren einstellen kann.

Ist in diesem Zusammenhang die erste Komponente des Wärmeübertrageelementes aus einem den Kern der Rohrwendel bildenden spiralförmig verlaufenden Wärmeübertragerrohr ausgeprägt, wobei die Rohrwendel und/oder das Wärmeübertragerrohr der Rohrwendel in mit Vorteil behafteter Weise den Hauptströmungskanal spiralförmig umläuft, so ist dies als überaus zweckmäßig anzusehen. Gewinnbringend kann hierbei die Rohrwendel und/oder das Wärmeübertragerrohr an dem Hauptströmungskanal, insbesondere an einem den Hauptströmungskanal bildenden Fluidrohr, unmittelbar oder mittelbar gelagert sein.

Auch ist es als äußerst praxisgerecht anzusehen, wenn die zweite Komponente des Wärmeübertragerelementes als eine Anordnung aus mehreren Übertragerrippen ausgebildet ist, wobei die Übertragerrippen an einer äußeren Mantelfläche und zumindest abschnittsweise entlang einer der Spiralform des Wärmeübertragerrohres folgenden Mittellinie des Wärmeübertragerrohres, der Mittellinie entgegengerichtet ausgeformt sind. Mittels der Übertragerrippen lässt sich der Wärmestrom aus dem Heizfluid in das Arbeitsfluid steigern, wodurch der Wirkungsgrad der Wärmeübertragung erhöht werden kann. Eine Ausführungsform der Übertragerrippen liegt hierbei darin, dass auf das die Übertragerrippen den Abschnitten nach tragende Wärmeübertragerrohr ein sich der Mittellinie des Wärmeübertragerrohres folgend, spiralförmig umwindendes Endlosband aufgebracht ist, welches der Abschnittslänge entsprechend abgelängt ist. Die Verbindung zwischen dem die Übertragerrippen bildenden Endlosband und dem Wärmeübertragerrohr kann stoffschlüssig ausgebildet sein, wobei die Erzeugung des Stoffschlusses unter Verwendung eines Schweißverfahrens, insbesondere eines Laserschweißverfahrens, erfolgen kann.

Sind die mindestens zwei Abschnitte des Wärmeübertragerelementes durch die Rohrwendel ausgeformt, wobei die Rohrwendel durch ein einteilig oder mehrteilig ausgeprägtes Wärmeübertragerrohr mit sich den Abschnitten nach in ihrem Werkstoff und/oder ihren Werkstoffeigenschaften unterscheidenden Übertragerrippen ausgebildet ist, so lassen sich in konstruktiv gewandter Weise verschiedene Ausführungsformen des Wärmeübertragerelementes realisieren. Dabei ist denkbar, dass die Rohrwendel einerseits ein einteilig ausgeformtes Wärmeübertragerrohr aufweist oder andererseits dieses Wärmeübertragerrohr aus mehreren miteinander fluiddurchlässig verbundenen Teilelementen besteht. Die Verbindung könnte kraft- und/oder formschlüssig, insbesondere jedoch stoffschlüssig ausgebildet sein. Weiterhin wären die an der Mantelfläche des Wärmeübertragerrohres ausgeformten Übertragerrippen in Abhängigkeit des jeweiligen Abschnittes des Wärmeübertragerelementes aus einem sich dem Abschnitt nach unterscheidenden Werkstoff oder einem Werkstoff mit verschiedenen Werkstoffeigenschaften ausgebildet. Würden die Übertragerrippen beispielsweise durch das beschriebene Endlosband gebildet, könnte somit zum einen ein einteilig ausgebildetes, d. h. nicht über ein stoffschlüssiges Verfahren zu einem einteilig ausgeformten, Wärmeübertragerrohr mit die Übertragerrippen bildendem und der Länge der Abschnitte entsprechend abgelängtem Endlosband unterschiedlicher Werkstoffe und/oder Werkstoffeigenschaften spiralförmig umwunden sein. Andererseits wäre denkbar, dass zwei oder mehrere Teilelemente der Rohrwendel, welche jeweils aus einem Teil des Wärmeübertragerrohres sowie sich in ihrem Werkstoff und/oder Werkstoffeigenschaften unterscheidenden Übertragerrippen bestehen, stoff-, kraft- und/oder formschlüssig zu der Rohrwendel verbunden werden.

Es ist ebenfalls als außerordentlich nutzbringend anzusehen, wenn der Werkstoff der ersten Komponente des Wärmeübertragerelementes Edelstahl und/oder der Werkstoff der zweiten Komponente des Wärmeübertragerelementes Aluminium, Kupfer und/oder Edelstahl ist. Hierbei bietet Edelstahl, d. h. insbesondere ein rostfreier Stahl, eine hohe Temperaturbeständigkeit durch einen gegenüber Aluminium und Kupfer höheren Schmelzpunkt. Dementgegen bieten Aluminium und Kupfer einen gegenüber Edelstahl weit höheren Wärmeleitkoeffizienten. Durch eine Kombination der Werkstoffe in erster Komponente und zweiter Komponente lassen sich die jeweiligen Vorteile miteinander verknüpfen. So könnten beispielsweise die erste Komponente und die zweite Komponente eines ersten, eine hohe Temperaturbeständigkeit erfordernden Abschnittes des Wärmeübertragers aus Edelstahl bestehen, wohingegen die erste Komponente eines zweiten, eine hohe Wärmeleitfähigkeit erfordernden Abschnittes des Wärmeübertragers aus Edelstahl, die zweite Komponente jedoch aus Aluminium und/oder Kupfer bestehen sollte. Die Verwendung eines Edelstahles für die erste Komponente in einem ersten sowie zweiten Abschnitt des Wärmeübertragerelementes würde überdies eine hohe Korrosionsbeständigkeit gegenüber dem im Inneren der ersten Komponente strömenden Arbeitsfluid, wie z. B. Ethanol, bieten.

Erfindungsgemäß ist das Kanalverschlusselement zudem stromabwärts eines Auslasses des Hauptströmungskanals und/oder des Auslasses des Nebenströmungskanals der Wärmeübertrageranordnung angeordnet, da sich durch die Anordnung des Kanalverschlusselementes stromabwärts des Auslasses und/oder der Auslässe des Hauptströmungskanals und/oder des Nebenströmungskanals der Aufbau der Wärmeübertrageranordnung vereinfachen lässt, wodurch die Fehleranfälligkeit der Vorrichtung vermindert werden kann. Das Kanalverschlusselement kann beispielsweise als eine Abgasklappe ausgeführt sein, dessen Winkelstellung über eine Steuerwelle veränderbar ist. Aufgrund der Anordnung stromabwärts und somit außerhalb der Wärmeübertrageranordnung würde die Verwendung einer Abgasklappe mit einer gegenüber einer Anordnung innerhalb der Wärmeübertrageranordnung kürzeren Steuerwelle ermöglicht, wodurch die Wahrscheinlichkeit einer Störung aufgrund eines beispielsweise Verklemmens der Steuerwelle verringert werden kann.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Weiterbildung der Wärmeübertrageranordnung;
- Fig. 2: eine Ausführungsform der Erfindung mit Kanalverschlusselement;
- Fig. 3: die grundsätzlich spiralförmig ausgebildete Rohrwendel.

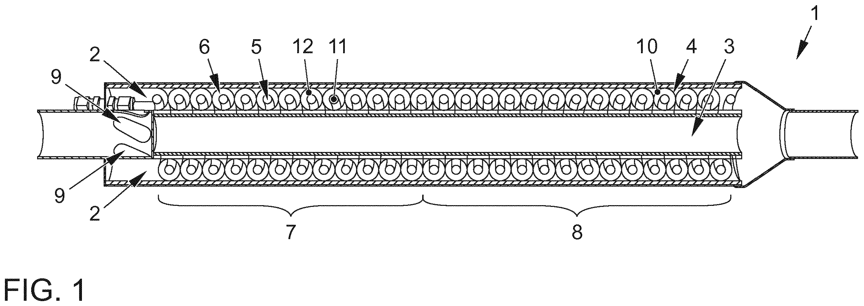

Figur 1 zeigt eine Weiterbildung der Wärmeübertrageranordnung 1 mit dem von dem Nebenströmungskanal 2 umgebenen Hauptströmungskanal 3, wobei innerhalb des Nebenströmungskanals 2 das als eine Rohrwendel 10 ausgebildete Wärmeübertragerelement 4 angeordnet ist. Diese dient im Betrieb einer Abwärmequelle dazu, Wärme aus einem von der Abwärmequelle erzeugten Heizfluid in ein das Wärmeübertragerelement 4 durchströmendes Arbeitsfluid zu übertragen. Das Wärmeübertragerelement 4 an sich weist hierbei zwei Komponenten 5, 6 auf, wobei die erste, von dem Arbeitsfluid durchströmbare Komponente 5 als spiralförmig verlaufendes Wärmeübertragerrohr 11, die zweite, die Oberfläche des Wärmeübertragerelementes 4 vergrößernde Komponente 6 als eine Anordnung aus den Übertragerrippen 12 ausgeprägt ist. Das Wärmeübertragerelement 4 weist zudem zwei Abschnitte 7, 8 auf, welche durch die einteilig ausgebildete Rohrwendel 10 ausgeformt sind. Hierbei ist der erste Abschnitt 7 des Wärmeübertragerelementes 4 dem Einlass 9 des Nebenströmungskanals 2 zugewandt gerichtet und der zweite Abschnitt 8 des Wärmeübertragerelementes 4 dem Einlass 9 des Nebenströmungskanals 2 abgewandt gerichtet im Nebenströmungskanal 2 angeordnet.

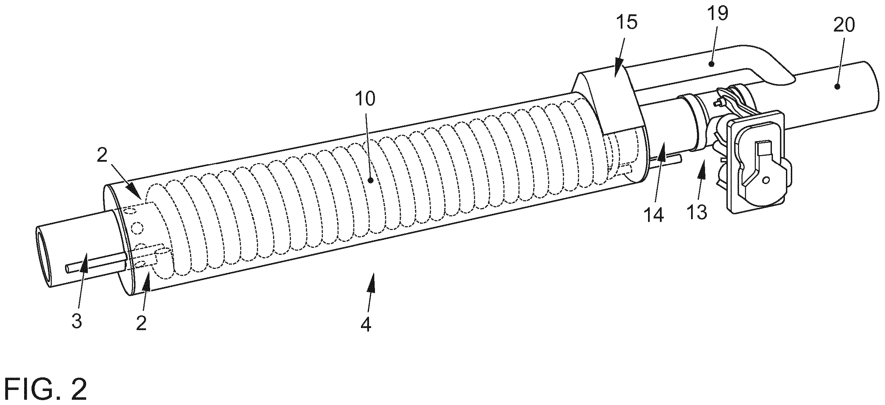

In Figur 2 ist eine Ausführungsform der Erfindung dargestellt, bei welcher die Anordnung des Kanalverschlusselementes 13 stromabwärts des Auslasses 14 des Hauptströmungskanals 3 sowie des Auslasses 15 des Nebenströmungskanals 2 der Wärmeübertrageranordnung 4 aufgezeigt ist. Innerhalb des Nebenströmungskanals 2 ist wiederum das als Rohrwendel 10 ausgebildete Wärmeübertragerelement 4 angeordnet. Es ist weiterhin dargestellt, dass der Nebenströmungskanal 2 ausschließlich über den Einlass 9 des Nebenströmungskanals 2 mit dem Hauptströmungskanal 3 fluiddurchlässig verbunden ist. Hierdurch wird bei vollständigem oder teilweisem Verschluss des Hauptströmungskanals 3 durch das Kanalverschlusselement 13 das in die Wärmeübertrageranordnung 1 einströmende Heizfluid über den Nebenströmungskanal 2 geleitet, wobei das Heizfluid aus diesem über den Auslass 15 des Nebenströmungskanals 2 austritt und durch das Überströmrohr 19 stromabwärts des Kanalverschlusselementes 13 in das Heizfluidsystem 20 rückgeleitet wird.

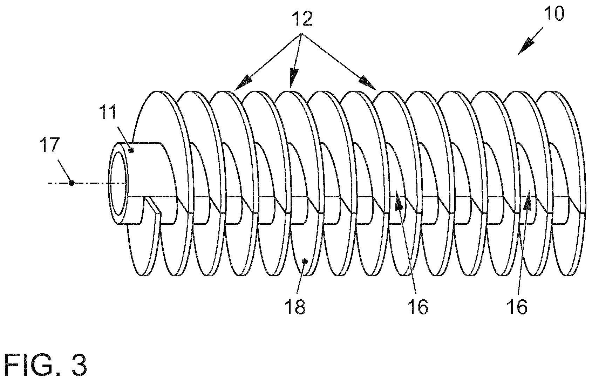

Figur 3 beschreibt eine Weiterbildung der grundsätzlich spiralförmig ausgebildeten Rohrwendel 10, welche in den in Figuren 1 und 2 entsprechend spiralförmig dargestellt ist. Hierbei sind an der äußeren Mantelfläche 16 des Wärmeübertragerrohres 11 und entlang der grundsätzlich der Spiralform des Wärmeübertragerrohres 11 folgenden Mittellinie 17 des Wärmeübertragerrohres 11, die Übertragerrippen 12 der Mittellinie 17 entgegengerichtet ausgeformt. Die Übertragerrippen 11 sind in dieser Weiterbildung so ausgeformt, dass diese durch das der Mittellinie 17 des Wärmeübertragerrohres 11 folgende, sich spiralförmig um das Wärmeübertragerrohr 11 windende Endlosband 18 ausgebildet sind.

### Bezugszeichenliste

- 1: Wärmeübertrageranordnung
- 2: Nebenströmungskanal
- 3: Hauptströmungskanal
- 4: Wärmeübertragerelement
- 5: Erste Komponente

- 6: Zweite Komponente
- 7: Erster Abschnitt
- 8: Zweiter Abschnitt
- 9: Einlass
- 10: Rohrwendel

- 11: Wärmeübertragerrohr
- 12: Übertragerrippe
- 13: Kanalverschlusselement
- 14: Auslass
- 15: Auslass

- 16: Mantelfläche
- 17: Mittellinie
- 18: Endlosband
- 19: Überströmrohr
- 20: Heizfluidsystem

## Patentansprüche

1. Vorrichtung zur Wärmerückgewinnung aus einem Heizfluid, aufweisend eine Wärmeübertrageranordnung (1) mit einem von einem Nebenströmungskanal (2) umgebenen Hauptströmungskanal (3), wobei innerhalb des Nebenströmungskanals (2) mindestens ein Wärmeübertragerelement (4) angeordnet ist, mittels welchem im Betrieb einer Abwärmequelle Wärme aus einem von der Abwärmequelle erzeugten Heizfluid in ein das Wärmeübertragerelement (4) durchströmendes Arbeitsfluid übertragbar ist und das Wärmeübertragerelement (4) zumindest zwei Komponenten (5, 6) aufweist, **dadurch gekennzeichnet, dass** in zumindest einem Abschnitt (7, 8) des Wärmeübertragerelementes (4) der Werkstoff einer von dem Arbeitsfluid durchströmbaren ersten Komponente (5) des Wärmeübertragerelementes (4) und der Werkstoff einer die Oberfläche des Wärmeübertragerelementes (4) vergrößernden zweiten Komponente (6) des Wärmeübertragerelementes(4) sich voneinander unterscheidende Werkstoffeigenschaften aufweisen und das Kanalverschlusselement (13) stromabwärts eines Auslasses (14) des Hauptströmungskanals (3) und/oder eines Auslasses (15) des Nebenströmungskanals (2) der Wärmeübertrageranordnung (1) angeordnet ist.

2. Vorrichtung nach Anspruch 1, **dadurch gekennzeichnet, dass** das Wärmeübertragerelement (4) mindestens zwei Abschnitte (7, 8) aufweist, wobei der Werkstoff und/oder die Werkstoffeigenschaften der ersten Komponente (5) und zweiten Komponente (6) des Wärmeübertragerelementes (4) in einem ersten Abschnitt (7) gleich und in einem zweitem Abschnitt (8) unterschiedlich ausgebildet ist oder sind.

3. Vorrichtung nach den Ansprüchen 1 oder 2, **dadurch gekennzeichnet, dass** der erste Abschnitt (7) des Wärmeübertragerelementes (4) einem Einlass (9) des Nebenströmungskanals (2) zugewandt gerichtet und/oder der zweite Abschnitt (8) des Wärmeübertragerelementes (4) dem Einlass (9) des Nebenströmungskanals (2) abgewandt gerichtet im Nebenströmungskanal (2) angeordnet ist.

4. Vorrichtung nach zumindest einem der vorangehenden Ansprüche, **dadurch gekennzeichnet, dass** der Werkstoff der zweiten Komponente (6) im zweiten Abschnitt (8) des Wärmeübertragerelementes (4) eine höhere Wärmeleitfähigkeit aufweist als der Werkstoff der zweiten Komponente (6) im ersten Abschnitt (7) des Wärmeübertragerelementes (4).

5. Vorrichtung nach zumindest einem der vorangehenden Ansprüche, **dadurch gekennzeichnet, dass** das Wärmeübertragerelement (4) als zumindest eine Rohrwendel (10) ausgebildet ist.

6. Vorrichtung nach zumindest einem der vorangehenden Ansprüche, **dadurch gekennzeichnet, dass** die erste Komponente (5) des Wärmeübertragerelementes (4) aus einem den Kern der Rohrwendel (10) bildenden spiralförmig verlaufenden Wärmeübertragerrohr (11) ausgeprägt ist.

7. Vorrichtung nach zumindest einem der vorangehenden Ansprüche, **dadurch gekennzeichnet, dass** die zweite Komponente (6) des Wärmeübertragerelementes (4) als eine Anordnung aus mehreren Übertragerrippen (12) ausgebildet ist.

8. Vorrichtung nach zumindest einem der vorangehenden Ansprüche, **dadurch gekennzeichnet, dass** die mindestens zwei Abschnitte (7, 8) des Wärmeübertragerelementes (4) durch die Rohrwendel (10) ausgeformt sind, wobei die Rohrwendel (10) durch ein einteilig oder mehrteilig ausgeprägtes Wärmeübertragerrohr (11) mit sich den Abschnitten (7, 8) nach in ihrem Werkstoff und/oder ihren Werkstoffeigenschaften unterscheidenden Übertragerrippen (12) ausgebildet ist.

9. Vorrichtung nach zumindest einem der vorangehenden Ansprüche, **dadurch gekennzeichnet, dass** der Werkstoff der ersten Komponente (5) des Wärmeübertragerelementes (4) Edelstahl und/oder der Werkstoff der zweiten Komponente (6) des Wärmeübertragerelementes (4) Aluminium, Kupfer und/oder Edelstahl ist.

## Claims

1. Apparatus for heat recovery from a heating fluid, having a heat exchanger arrangement (1) with a main flow duct (3) which is surrounded by an auxiliary flow duct (2), at least one heat exchanger element (4) being arranged within the auxiliary flow duct (2), by means of which at least one heat exchanger element (4), during operation of a waste heat source, heat can be transferred from a heating fluid which is produced by the waste heat source into a working fluid which flows through the heat exchanger element (4), and the heat exchanger element (4) has at least two components (5, 6), **characterized in that**, in at least one section (7, 8) of the heat exchanger element (4), the material of a first component (5) of the heat exchanger element (4), through which first component (5) the working fluid can flow, and the material of a second component (6) of the heat exchanger element (4), which second component (6) increases the surface area of the heat exchanger element (4), have material properties which differ from one another, and the duct closure element (13) is arranged downstream of an outlet (14) of the main flow duct (3) and/or an outlet (15) of the auxiliary flow duct (2) of the heat exchanger arrangement (1) .

2. Apparatus according to Claim 1, **characterized in that** the heat exchanger element (4) has at least two sections (7, 8), the material and/or the material properties of the first component (5) and second component (6) of the heat exchanger element (4) being of identical configuration in a first section (7) and being of different configuration in a second section (8).

3. Apparatus according to Claim 1 or 2, **characterized in that** the first section (7) of the heat exchanger element (4) is arranged in the auxiliary flow duct (2) in a manner which is directed so as to face an inlet (9) of the auxiliary flow duct (2), and/or the second section (8) of the heat exchanger element (4) is arranged in the auxiliary flow duct (2) in a manner which is directed so as to face away from the inlet (9) of the auxiliary flow duct (2).

4. Apparatus according to at least one of the preceding claims, **characterized in that** the material of the second component (6) in the second section (8) of the heat exchanger element (4) has a higher thermal conductivity than the material of the second component (6) in the first section (7) of the heat exchanger element (4).

5. Apparatus according to at least one of the preceding claims, **characterized in that** the heat exchanger element (4) is configured as at least one tube coil (10).

6. Apparatus according to at least one of the preceding claims, **characterized in that** the first component (5) of the heat exchanger element (4) is formed from a helically running heat exchanger tube (11) which forms the core of the tube coil (10).

7. Apparatus according to at least one of the preceding claims, **characterized in that** the second component (6) of the heat exchanger element (4) is configured as an arrangement consisting of a plurality of exchanger ribs (12) .

8. Apparatus according to at least one of the preceding claims, **characterized in that** the at least two sections (7, 8) of the heat exchanger element (4) are formed by way of the tube coil (10), the tube coil (10) being configured by way of a heat exchanger tube (11) which is formed in one piece or in multiple pieces and has exchanger ribs (12) which differ in terms of their material and/or their material properties in accordance with the sections (7, 8).

9. Apparatus according to at least one of the preceding claims, **characterized in that** the material of the first component (5) of the heat exchanger element (4) is stainless steel, and/or the material of the second component (6) of the heat exchanger element (4) is aluminium, copper and/or stainless steel.

## Revendications

1. Dispositif de récupération de chaleur à partir d'un fluide chauffant, comprenant un agencement de transfert de chaleur (1) doté d'un canal d'écoulement principal (3) entouré par un canal d'écoulement secondaire (2), au moins un élément de transfert de chaleur (4) étant agencé à l'intérieur du canal d'écoulement secondaire (2), au moyen duquel lors de l'exploitation d'une source de chaleur perdue, de la chaleur peut être transférée depuis un fluide chauffant généré par la source de chaleur perdue dans un fluide de travail qui traverse l'élément de transfert de chaleur (4), et l'élément de transfert de chaleur (4) comprenant au moins deux composants (5, 6), **caractérisé en ce que** dans au moins une section (7, 8) de l'élément de transfert de chaleur (4), le matériau d'un premier composant (5) de l'élément de transfert de chaleur (4), qui peut être traversé par le fluide de travail, et le matériau d'un deuxième composant (6) de l'élément de transfert de chaleur (4), qui agrandit la surface de l'élément de transfert de chaleur (4), présentent des propriétés de matériau différentes les unes des autres et l'élément de fermeture de canal (13) est agencé en aval d'une sortie (14) du canal d'écoulement principal (3) et/ou d'une sortie (15) du canal d'écoulement secondaire (2) de l'agencement de transfert de chaleur (1) .

2. Dispositif selon la revendication 1, **caractérisé en ce que** l'élément de transfert de chaleur (4) comprend au moins deux sections (7, 8), le matériau et/ou les propriétés de matériau du premier composant (5) et du deuxième composant (6) de l'élément de transfert de chaleur (4) étant configurés de manière identique dans une première section (7) et de manière différente dans une deuxième section (8).

3. Dispositif selon la revendication 1 ou 2, **caractérisé en ce que** la première section (7) de l'élément de transfert de chaleur (4) est agencée dans le canal d'écoulement secondaire (2) de manière à être orientée pour faire face à une entrée (9) du canal d'écoulement secondaire (2) et/ou la deuxième section (8) de l'élément de transfert de chaleur (4) est agencée dans le canal d'écoulement secondaire (2) de manière à être orientée pour être détournée de l'entrée (9) du canal d'écoulement secondaire (2).

4. Dispositif selon au moins l'une quelconque des revendications précédentes, **caractérisé en ce que** le matériau du deuxième composant (6) présente dans la deuxième section (8) de l'élément de transfert de chaleur (4) une conductivité de chaleur plus élevée que le matériau du deuxième composant (6) dans la première section (7) de l'élément de transfert de chaleur (4).

5. Dispositif selon au moins l'une quelconque des revendications précédentes, **caractérisé en ce que** l'élément de transfert de chaleur (4) est configuré sous la forme d'au moins un tube hélicoïdal (10).

6. Dispositif selon au moins l'une quelconque des revendications précédentes, **caractérisé en ce que** le premier composant (5) de l'élément de transfert de chaleur (4) est réalisé par un tube de transfert de chaleur (11) s'étendant en spirale en formant le noyau du tube hélicoïdal (10).

7. Dispositif selon au moins l'une quelconque des revendications précédentes, **caractérisé en ce que** le deuxième composant (6) de l'élément de transfert de chaleur (4) est configuré sous la forme d'un agencement de plusieurs nervures de transfert (12).

8. Dispositif selon au moins l'une quelconque des revendications précédentes, **caractérisé en ce que** lesdites au moins deux sections (7, 8) de l'élément de transfert de chaleur (4) sont formées par le tube hélicoïdal (10), le tube hélicoïdal (10) étant formé par un tube de transfert de chaleur (11) réalisé à une partie ou à plusieurs parties avec des nervures de transfert (12) différant au niveau de leur matériau et/ou de leurs propriétés de matériau selon les sections (7, 8).

9. Dispositif selon au moins l'une quelconque des revendications précédentes, **caractérisé en ce que** le matériau du premier composant (5) de l'élément de transfert de chaleur (4) est de l'acier inoxydable et/ou le matériau du deuxième composant (6) de l'élément de transfert de chaleur (4) est de l'aluminium, du cuivre et/ou de l'acier inoxydable.
